# FASCICULE DE BREVET EUROPEEN

(11) **EP 3 482 066 B1**
(45) Date de publication et mention de la délivrance du brevet: **22.04.2020**
(21) Numéro de dépôt: 17734120.3
(22) Date de dépôt: 04.07.2017
(51) Int. Cl.: F03B 3/18

(54) **PROCEDE D'OPTIMISATION DU REGLAGE DU VANNAGE D'AU MOINS UNE TURBINE HYDRAULIQUE**
VERFAHREN ZUR OPTIMIERUNG DER EINSTELLUNG DER ANSPRITZUNG MINDESTENS EINER HYDRAULISCHEN TURBINE
METHOD FOR OPTIMIZING THE ADJUSTMENT OF THE GATING OF AT LEAST ONE HYDRAULIC TURBINE

(30) Priorité: 05.07.2016 FR 1656403
(43) Date de publication de la demande: 15.05.2019
(73) Titulaire: Electricité de France, 75008 Paris (FR)
(72) Inventeur: MOUSSEEFF, Olivier, 38620 MASSIEU (FR); HIDEUX, Eric, 04860 PIERREVERT (FR)
(74) Mandataire: Regimbeau
(86) Numéro de dépôt international: PCT/EP2017/066644
(87) Numéro de publication internationale: WO 2018/007390

(56) Documents cités:
- FR-A1- 2 300 230
- GB-A- 207 448
- JP-A- S 601 378
- US-A- 3 236 498
- US-A- 3 613 721

## Description

### DOMAINE DE L'INVENTION

La présente invention se rapporte à un procédé d'optimisation du réglage du vannage d'au moins une turbine hydraulique.

### ARRIERE PLAN TECHNOLOGIQUE DE L'INVENTION

La présente invention se situe dans le domaine de la production d'énergie par voie hydro-électrique.

Dans les barrages et dans les installations à conduite forcée existants, l'énergie qui est produite dépend essentiellement de la pression obtenue grâce à la hauteur d'eau retenue par le barrage, respectivement dévalée à l'intérieur de la conduite forcée.

L'obtention de la hauteur d'eau est assurée soit par le barrage de retenue, soit par la création d'un réservoir d'eau en altitude. L'eau traverse une turbine qui entraine un alternateur produisant de l'électricité.

Pour des raisons de sécurité que l'on comprend aisément, des dispositifs de régulation et d'interruption du débit sont installés à l'amont des turbines.

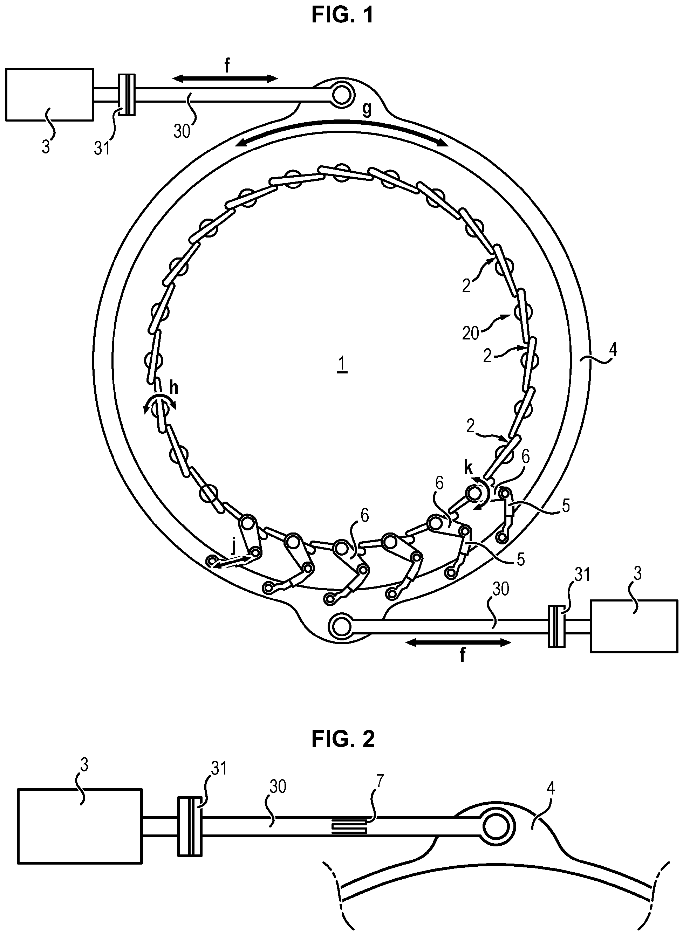

On se reportera ci-après à la figure 1 annexée pour expliquer la structure et le fonctionnement de ce dispositif de régulation et d'interruption.

Sur cette figure, le dispositif, qui entoure une turbine 1 non représentée, est visible de face.

Le dispositif de régulation et d'arrêt, également appelé en termes du métier "vannage" ou "dispositif de vannage", est composé de lames 2 appelées "directrices", chacune d'entre elles étant mobiles autour d'un axe propre 20 dans un même mouvement d'ensemble, qui, lorsque les directrices occupent leur position de fermeture (telle que représentée sur la figure), viennent s'appuyer les unes sur les autres (double flèche h).

Ce mouvement est rendu possible par la présence d'un "cercle de vannage" qui, en réalité a la forme d'un anneau 4, et qui est relié cinématiquement à chacune des directrices 2.

Ainsi, chacun des directrices 2 est équipée d'un maneton 6, lui-même fixé à une extrémité d'une biellette 5. Cette biellette est, quant à elle, articulée sur le cercle de vannage 4.

Pour faciliter la consultation de la figure annexée, de nombreux couples biellette/maneton n'ont pas été représentés.

Par ailleurs, le cercle de vannage 4 est associé à une paire de vérins 3. Ils s'étendent parallèlement l'un à l'autre, sont diamétralement opposés, et sont l'image l'un de l'autre dans un miroir.

Leur tige 30 a son extrémité libre articulée sur le cercle 4. Sous réserve que les deux vérins 3 soient actionnés de manière synchrone et dans le même sens, cela se traduit par une rotation du cercle de vannage 4 (voir la double flèche g).

Le dit mouvement d'ensemble des directrices 2 est alors assuré selon la chaîne cinématique suivante :
/vérins 3 (flèche f) vers cercle de vannage 4 (flèche g) vers biellette 5 (flèche j) vers maneton 6 (flèche k) vers lame directrice 2/ (flèche h).

Bien entendu, dans d'autres modes de réalisation non représentés ici, on pourrait avoir affaire à un seul des deux vérins de la figure 1, ou à un seul vérin pourvu d'un palonnier et d'un seul (ou deux) bras d'actionnement.

Une autre alternative serait d'avoir deux vérins, mais non montés en opposition (ce qui nécessite alors que lorsque l'un voit sa tige s'étendre, l'autre la rétracte).

Afin d'assurer l'intégrité du système de vannage et de la turbine 1, notamment si une ou plusieurs directrices 2 sont bloquées par exemple par des débris, les biellettes 5 ont pour fonction de servir de "fusible mécanique" et donc de se briser au-delà d'un effort limite.

Pour garantir l'étanchéité de la turbine 1 au niveau des directrices 2, le constructeur de la turbine 1 impose une surcharge au système de vannage en appliquant un excédent de déplacement au(x) vérin(s) de commande.

Ainsi, dans l'exemple illustré ici, la course de la tige 30 des vérins 3 est réglable et peut être ajustée par un dispositif 31 (de modification de la longueur de ladite tige) directement placé sur la tige 30.

Cette surcharge entraine une usure prématurée des directrices, manetons et biellettes, qui, au pire, peut aller jusqu'à la détérioration des directrices et/ou la rupture des biellettes, ce qui oblige l'exploitant à des travaux de maintenance très importants.

Les distributeurs des groupes hydrauliques sont très sollicités lors des phases de démarrage et d'arrêt.

Leurs fonctions sont les suivantes :

### 1. Réglage de l'énergie hydraulique :

Ils gèrent la mise en rotation jusqu'au couplage au réseau du groupe hydraulique. De plus, ils règlent la puissance du groupe de zéro à la pleine puissance.

### 2. Séparation de l'énergie hydraulique :

Ils séparent les groupes de l'énergie hydraulique et mettent à l'arrêt les groupes par une fermeture normale ou rapide, en un temps maitrisé qui est très stratégique.

En effet, le temps de manoeuvre rapide du distributeur lors d'arrêt urgent provoqué par une protection, doit permettre d'éviter les emballements de vitesse du groupe, tout en maitrisant la surpression dans la partie adduction amont (impact de la sûreté hydraulique sur la conduite forcée).

### 3. Isolation de l'énergie hydraulique :

Le distributeur fermé doit être suffisamment étanche pour éviter aux groupes de redémarrer du fait de fuites.

Lorsque les groupes sont à l'arrêt et qu'ils ne sont pas équipés de vanne de garde, les fuites génèrent des pertes d'eau et donc des pertes d'exploitation.

Les efforts du ou des vérins de commande doivent être suffisants pour maintenir le vannage fermé et contrer la poussée hydrostatique qui tend à l'ouvrir.

Les efforts de manoeuvre et de fermeture du distributeur sont donc stratégiques car ils ne doivent pas générer d'usure prématurée sur toute ou partie de la chaine cinématique qui pourrait provoquer des frottements anormaux causant une dérive des temps de manoeuvre et perturber l'étanchéité du système de vannage du groupe à l'arrêt.

La présente invention vise à pallier cette difficulté.

On notera qu'un procédé conforme aux caractéristiques du préambule de la revendication 1 annexée est décrit dans le document US 3 613 721.

### RESUME DE L'INVENTION

Ainsi, la présente invention se rapporte à un procédé d'optimisation du réglage du vannage d'au moins une turbine hydraulique, cette turbine étant pourvue d'une série de lames directrices, ces lames directrices étant mobiles selon un même mouvement d'ensemble, entre une position de fermeture dans laquelle elles sont appuyées deux à deux les unes sur les autres et une position d'ouverture dans laquelle elles sont distantes les unes des autres, via un cercle de vannage qui est relié cinématiquement à chacune de ces lames directrices, ce cercle de vannage étant lui-même déplacé en rotation sur lui-même par au moins un vérin, ce vérin comportant un dispositif de réglage de la course de sa tige,
caractérisé par le fait qu'il comporte au moins les étapes suivantes, ladite turbine étant préalablement mise à l'arrêt et hors d'eau et la tige dudit vérin étant pourvue d'au moins une jauge de contrainte :
1/ Calcul de l'effort théorique à appliquer audit vérin pour obtenir une fermeture étanche desdites lames directrices ;
2/ Mesure, via ladite jauge de contrainte, de l'effort appliqué sur ledit vérin, ce dernier étant hors fonctionnement ;
3/ Après mise en service dudit vérin, déplacement de sa tige jusqu'à ce que lesdites lames directrices occupent ladite position de fermeture et mesure de l'effort correspondant, appelé "effort mesuré" ;
4/ Comparaison de l'effort mesuré à l'effort théorique calculé à l'étape 1/ ;
5/ Mise hors fonctionnement dudit vérin si une différence est constatée entre les deux efforts à l'issue de l'étape 4/ ;
6/ Modification de la course de la tige dudit vérin au moyen dudit dispositif de réglage ;
7/ Après actionnement desdites lames directrices pour leur faire occuper ladite position d'ouverture, réitération des étapes 3/ à 6/ tant que ledit effort mesuré n'a pas atteint l'effort théorique.

Le réglage de la précontrainte permet de contrer la poussée hydrostatique du système de vannage fermé, sans excès de contraintes et déformations pouvant engendrer ces usures excessives.

L'optimisation du réglage de la précontrainte permet aussi :
- de supprimer les casses fréquentes d'organes fusibles ;
- d'augmenter la productibilité des groupes en réduisant la fréquence des opérations de maintenance ;
- de limiter les pertes d'eau en diminuant les fuites et donc les pertes d'exploitation ;
- d'assurer la continuité des efforts de manoeuvre et donc de vitesse de fermeture au regard de la sûreté hydraulique.

Par ailleurs, selon d'autres caractéristiques non limitatives et avantageuses de ce procédé :
- quand on fait usage, entre lesdites lames directrices et ledit cercle de vannage, de biellettes fusibles, alors ces biellettes sont également pourvues d'au moins une jauge de contrainte ;
- il comporte une dernière étape de test dans laquelle on réitère lesdites étapes 3/ à 5/ alors que ladite turbine est en fonctionnement ;
- l'on fait usage, à titre de dispositif de réglage de la course de la tige dudit vérin, d'au moins une cale ou d'au moins un système vis/écrou.
- il est mis en oeuvre via un programme chargé dans un ordinateur.

### BREVE DESCRIPTION DES DESSINS

D'autres caractéristiques et avantages de l'invention apparaîtront à la lecture de la description suivante d'un mode de réalisation préféré de l'invention. Cette description est faite en référence aux dessins annexés dans lesquels :
- comme indiqué plus haut, la figure 1 est une vue schématique de face d'un dispositif de régulation et d'interruption d'une turbine hydraulique auquel peut être appliqué le procédé selon la présente invention ;
- la figure 2 est un schéma montrant un vérin de l'installation de la figure 1 qui est équipé d'une jauge de contrainte.

### DESCRIPTION DETAILLEE DE L'INVENTION

On décrira ci-après un mode de réalisation du procédé selon l'invention en référence à la figure 1 dont il a déjà été fait état plus haut.

La première des étapes distinctives (c'est à dire l'étape 1/ citée plus haut) de ce procédé consiste en un calcul de l'effort théorique à appliquer au(x) vérin(s) 3 pour obtenir une fermeture étanche des lames directrices 2.

Le calcul de l'effort théorique est réalisé en mécanique statique dans un fichier de calcul qui tient compte des différentes technologies des vannages existants. Ce fichier doit être renseigné sur différents caractéristiques qui feront l'objet des paragraphes a), b), c) et d) explicités plus bas.

La transmission des efforts se fait suivant de deux principes, à savoir une transmission d'efforts linéaires ou par couple.

Les bielles et biellettes 5 transmettent un effort linéaire. Elles possèdent une liaison aux autres pièces auxquelles elles sont reliées par axe d'articulation à chacune de leurs extrémités.

Par contre, les palonnier, cercle de vannage 4 et manetons 6 décrivent un mouvement rotatif et transmettent un effort sous la forme d'un couple.

Ainsi, à titre d'exemple, chaque vérin 3 (de la figure 1) et leur tige 30 associée transmettent un effort linéaire au cercle de vannage 4. Ce dernier transmet un couple qui est transformé en un effort linéaire aux biellettes 5 qui, elles-mêmes le transmettent aux manetons 6, qui, enfin, transmettent à leur tour un couple aux directrices 2.

Certaines dimensions et certains angles de ces pièces sont déterminés par projection sur un logiciel de dessin et par des calculs trigonométriques.

Ces angles sont en effet nécessaires aux calculs de transmission de couples.

C'est notamment le cas des vérins 3 vis-à-vis du cercle de vannage 4, (idem entre le cercle 4 et la biellette 5 et entre la biellette 5 et le maneton 6).

Ils permettent de déterminer le rayon tangentiel, c'est-à-dire le rayon minimal réel d'application de l'effort, autrement dit la longueur du segment à une extrémité perpendiculaire à l'effort et à l'autre extrémité au centre de rotation de la pièce concernée.

Le calcul de couple est réalisé par le produit du rayon tangentiel d'application de l'effort et la valeur dudit effort. Le couple est exprimé alors en mètre déca Newton (m.daN). Ainsi, un couple de 1 m.daN est le résultat d'un effort de 1 daN sur un rayon de 1 mètre.

Les caractéristiques précitées sont les suivantes :

### a) Effort de la commande :

- Pression minimale du système hydraulique de commande du ou des vérins ;
- Dimensions des surfaces de pistons soumises à la pression hydraulique du ou des vérins ;
- F = P x S avec :
   F = force en déca Newton ;
   P = Pression en bars ;
   S = Surface des pistons en m².

### b) Détermination du couple de commande de fermeture des directrices :

- Dimensions des différentes pièces liées entre elles, formant la chaine cinématique de transmission des efforts du vérin 3 jusqu'aux lames directrices 2.
- Positions géométriques de certaines pièces ;
- Angles en degrés entre les pièces se transmettant les efforts transformés en couple ;
- Rayons en mètre pour les pièces qui transmettent un couple 4.

Des parties spécifiques sont à renseigner suivant les différentes technologies, et notamment en fonction de la présence d'un palonnier, du nombre de bras associés et du nombre de vérins 3.

### c) Détermination du couple subi par les lames directrices sous la pression de l'eau (poussée hydrostatique) :

- Hauteur H de chute nette maximale (exprimée en mètres) de l'installation en vue de connaître la pression hydrostatique P, exprimée en bars.
- Géométries des surfaces mouillées des directrices soumises à pression hydrostatique, à savoir :
   S1 = R1 x H où R1 est le rayon du bord d'entrée et où la surface est exprimée en m²;
   S2 = R2 x H, où R2 est le rayon du bord de fuite et où la surface est exprimée en m²;
- F = P x (S1 - S2), force résiduelle (en daN) qui a pour effet d'ouvrir (si S1<S2) ou de fermer (si S1>S2) les directrices. Bien entendu, F = 0 quand S1 =S2 ;
- Rm = (R1 - R2)/2, rayon moyen d'application de F, en mètres ;
- C = F x Rm, couple hydrostatique(en m.daN) qui a pour effet d'ouvrir ou fermer les directrices suivant que S1<S2 ou S1>S2.

### d) Précontrainte nécessaire :

Les caractéristiques précédentes étant renseignées, un calcul automatisé permet de déterminer les efforts de la précontrainte qui devront être appliqués à la fermeture par les bielles de liaison 5 du ou des vérins 3 au cercle 4, suivant la justesse dudit procédé. Ce calcul automatisé compare le couple de fermeture au couple hydrostatique et applique une marge avec une tolérance de réglage.

Une fois ce calcul théorique réalisé, on procède à la mise en oeuvre de la deuxième étape du procédé, à savoir la mesure, via une jauge de contrainte, de l'effort appliqué sur ledit au moins un vérin dont est équipé la turbine, ce vérin étant hors fonctionnement.

Comme montré à la figure 2, cette jauge 7 est placée sur la tige 30 de chaque vérin 3. A titre indicatif, une jauge bidirectionnelle telle que celle commercialisée par la société HBM sous la référence 1XY31-6/350 ou par la société VISHAY MICROMESURE sous la référence 06-CEA-125UT-350 convient tout à fait.

Cette méthode comprend donc l'instrumentation en jauges de déformation 7, afin de mesurer ces efforts dans la tige 30 et les organes de liaison de chaque vérin 3 du cercle de vannage 4.

La mesure des pressions de commande des servomoteurs des vérins 3 et la mesure de leurs déplacements permettent de s'assurer du bon fonctionnement de ceux-ci et de vérifier que la précontrainte appliquée correspond bien à la bonne puissance des vérins.

Plus précisément, le contrôle et le réglage de la précontrainte sont réalisés comme suit, après la pose d'au moins une jauge de contrainte 7 sur la tige 30 de chaque vérin 3 et, en cas de nécessité, sur les biellettes fusibles 5 :
a. mise à l'arrêt de l'installation, la machine étant hors d'eau ;
b. Contrôle et/ou réglage optimal de fermeture des lames directrices 2, c'est à dire en contact les unes avec les autres ;
c. Mesure à vide, via la jauge de contrainte 7, de l'effort appliqué sur chaque vérin 3, ce dernier n'exerçant aucun effort ;
d. Une remise en service commande hydraulique du/des vérins 3 ;
e. Après remise en service dudit vérin 3, déplacement de sa tige 30 jusqu'à ce que les lames directrices 2 occupent leur position de fermeture et mesure de l'effort correspondant. Cet effort est qualifié d'"effort mesuré" ;
f. Comparaison de cet effort mesuré avec l'effort théorique mesuré antérieurement ;
g. Arrêt de la commande hydraulique de chaque vérin 3 et mise hors fonctionnement de celui-ci si une différence a été constatée entre ces deux efforts ;
h. Modification de la course de la tige 30 de chaque vérin 3 à l'aide du dispositif de réglage 31 (ce dispositif 31 peut comprendre au moins une cale ou un système vis/écrou);
i. Après actionnement desdites lames directrices 2 pour leur faire occuper leur position d'ouverture, réitération des étapes e) et suivantes tant que ledit effort mesuré n'a pas atteint l'effort théorique.

Une dernière étape de test consiste à réitérer lesdites étapes e) à g) alors que ladite turbine 1 est en fonctionnement.

Préférentiellement, un ordinateur permet l'interprétation de la mesure des efforts pour comparaison au fichier de calcul de l'effort théorique.

La mise en oeuvre du procédé de la présente invention apporte notamment les avantages suivants :
- Réglage des efforts de fermeture à la valeur strictement nécessaire.
- Mesure précise, en direct, de la valeur de précontrainte correspondant à la position du cercle de vannage fermé.
- Mesure des efforts dus aux frottements pendant les manoeuvres.
- Mesure en eau sous la poussée hydrostatique réelle et vérification de l'atteinte des résultats optimums.
- Répartition des efforts dans chaque élément de commande (dans le cas où l'on fait usage de plusieurs bras de manoeuvre).

La présente invention s'applique à toutes les turbines hydroélectriques, qu'elles soient de type FRANCIS, KAPLAN, à bulbe, à hélice ou réversible (c'est à dire qui peut fonctionner comme turbine ou comme pompe).

Cette méthodologie peut être appliquée à des groupes de toutes puissances et de toutes hauteurs de chute.

Quand le procédé est appliqué à l'une ou l'autre des turbines ci-dessus, cela procure les avantages suivants :
- Gain de productibilité ;
- Réduction de la maintenance
- Augmentation de durée de vie des pièces d'usure et de guidage ;
- Maitrise des efforts dans la chaine cinématique ;
- Fiabilisation du fonctionnement de la chaîne cinématique dans le temps et, de ce fait des temps de manoeuvre (d'où un impact positif sur la sûreté hydraulique) ;
- Réduction de l'usure des vannes de garde par un meilleur équilibrage des pressions avant manoeuvre de celles-ci (l'étanchéité du vannage impacte la pression d'équilibrage dans la zone comprise entre la vanne et le vannage).

## Revendications

1. Procédé d'optimisation du réglage du vannage d'au moins une turbine hydraulique (1), cette turbine (1) étant pourvue d'une série de lames directrices (2), ces lames directrices (2) étant mobiles selon un même mouvement d'ensemble, entre une position de fermeture dans laquelle elles sont appuyées deux à deux les unes sur les autres et une position d'ouverture dans laquelle elles sont distantes les unes des autres, via un cercle de vannage (4) qui est relié cinématiquement à chacune de ces lames directrices (2), ce cercle de vannage (4) étant lui-même déplacé en rotation sur lui-même par au moins un vérin (3), ce vérin (3) comportant un dispositif de réglage (31) de la course de sa tige (30),
**caractérisé par le fait qu'**il comporte au moins les étapes suivantes, ladite turbine (1) étant préalablement mise à l'arrêt et hors d'eau et la tige (30) dudit vérin (3) étant pourvue d'au moins une jauge de contrainte (7) :
1/ Calcul de l'effort théorique à appliquer audit vérin (3) pour obtenir une fermeture étanche desdites lames directrices (2) ;
2/ Mesure, via ladite jauge de contrainte (3), de l'effort appliqué sur ledit vérin (3), ce dernier étant hors fonctionnement ;
3/ Après mise en service dudit vérin (3), déplacement de sa tige (30) jusqu'à ce que lesdites lames directrices (2) occupent ladite position de fermeture et mesure de l'effort correspondant, appelé "effort mesuré" ;
4/ Comparaison de l'effort mesuré à l'effort théorique calculé à l'étape 1/ ;
5/ Mise hors fonctionnement dudit vérin (3) si une différence est constatée entre les deux efforts à l'issue de l'étape 4/ ;
6/ Modification de la course de la tige (30) dudit vérin (3) au moyen dudit dispositif de réglage ;
7/ Après actionnement desdites lames directrices (2) pour leur faire occuper ladite position d'ouverture, réitération des étapes 3/ à 6/ tant que ledit effort mesuré n'a pas atteint l'effort théorique.

2. Procédé selon la revendication 1 dans lequel on fait usage, entre lesdites lames directrices (2) et ledit cercle de vannage (4), de biellettes fusibles (5), **caractérisé par le fait que** ces biellettes sont également pourvues d'au moins une jauge de contrainte (7).

3. Procédé selon l'une des revendications précédentes, **caractérisé par le fait qu'**il comporte une dernière étape de test dans laquelle on réitère lesdites étapes 3/ à 5/ alors que ladite turbine (1) est en fonctionnement.

4. Procédé selon l'une des revendications précédentes, **caractérisé par le fait que** l'on fait usage, à titre de dispositif de réglage (31) de la course de la tige (30) dudit vérin (3), d'au moins une cale ou d'au moins un système vis/écrou.

5. Procédé selon l'une des revendications précédentes, **caractérisé par le fait qu'**il est mis en oeuvre via un programme chargé dans un ordinateur.

## Patentansprüche

1. Verfahren zur Optimierung der Einstellung des Verschlusses mindestens einer hydraulischen Turbine (1), wobei diese Turbine (1) mit einer Reihe von Leitblättern (2) versehen ist, wobei diese Leitblätter (2) gemäß einer selben Gesamtbewegung beweglich sind zwischen einer geschlossenen Stellung, in der sie paarweise aufeinander aufliegen, und einer geöffneten Stellung, in der sie voneinander beabstandet sind, über einen Verschlusskreis (4), der kinematisch mit jedem von diesen Leitblättern (2) verbunden ist, wobei dieser Verschlusskreis (4) selbst durch mindestens einen Zylinder (3) um sich selbst drehbar verlagert wird, wobei dieser Zylinder (3) eine Vorrichtung (31) zur Einstellung des Weges seiner Stange (30) umfasst,
**dadurch gekennzeichnet, dass** es mindestens die folgenden Schritte umfasst, wobei die Turbine (1) im Voraus außer Betrieb gesetzt und aus dem Wasser genommen wird und die Stange (30) des Zylinders (3) mit mindestens einem Dehnungsmessstreifen (7) versehen ist:
1/ Berechnung der theoretischen Kraft, die auf den Zylinder (3) anzuwenden ist, um ein dichtes Schließen der Leitblätter (2) zu erhalten;
2/ über den Dehnungsmessstreifen (3), Messen der auf den Zylinder (3) angewandten Kraft, wobei dieser letztere außer Betrieb ist;
3/ nach der Inbetriebnahme des Zylinders (3), Verlagerung seiner Stange (30), bis die Leitblätter (2) die geschlossene Stellung einnehmen, und Messen der entsprechenden Kraft, die "gemessene Kraft" genannt wird;
4/ Vergleich der gemessenen Kraft mit der im Schritt 1/ berechneten theoretischen Kraft;
5/ Außerbetriebnahme des Zylinders (3), wenn am Ende von Schritt 4/ ein Unterschied zwischen den zwei Kräften festgestellt wird;
6/ Änderung des Weges der Stange (30) des Zylinders (3) mittels der Einstellvorrichtung;
7/ nach der Betätigung der Leitblätter (2), um sie die geöffnete Stellung einnehmen zu lassen, Wiederholen der Schritte 3/ bis 6/, solange die gemessene Kraft nicht die theoretische Kraft erreicht hat.

2. Verfahren nach Anspruch 1, wobei zwischen den Leitblättern (2) und dem Verschlusskreis (4) Sicherungsschwingarme (5) genutzt werden, **dadurch gekennzeichnet, dass** diese Schwingarme auch mit mindestens einem Dehnungsmessstreifen (7) versehen sind.

3. Verfahren nach einem der vorhergehenden Ansprüche, **dadurch gekennzeichnet, dass** er einen letzten Testschritt umfasst, in dem die Schritte 3/ bis 5/ wiederholt werden, wenn die Turbine (1) in Betrieb ist.

4. Verfahren nach einem der vorhergehenden Ansprüche, **dadurch gekennzeichnet, dass** als Vorrichtung (31) zur Einstellung des Weges der Stange (30) des Zylinders (3) mindestens ein Keil oder mindestens ein Schrauben/Mutter-System genutzt wird.

5. Verfahren nach einem der vorhergehenden Ansprüche, **dadurch gekennzeichnet, dass** es über ein Programm durchgeführt wird, das in einen Computer geladen wird.

## Claims

1. A method for optimizing the adjustment of the gating of at least one hydraulic turbine (1), this turbine (1) being provided with a series of wicket gates (2), these wicket gates (2) being movable in a same conjoined movement, between a closure position in which they are pressed two by two on each other and an opening position in which they are distant from each other, via a gating ring (4) which is kinematically connected to each of these wicket gates (2), this gating ring (4) being itself moved in rotation around itself by at least one cylinder (3), this cylinder (3) including a device (31) for adjusting the travel of its rod (30),
**characterized by** the fact that it includes at least the following steps, said turbine (1) being previously stopped and drained of water and the rod (30) of said cylinder (3) being provided with at least one strain gauge (7):
1/ Calculation of the theoretical force to be applied to said cylinder (3) to obtain a watertight closure of said wicket gates (2);
2/ Measurement, via said strain gauge (3), of the force applied to said cylinder (3), the latter being out of operation;
3/ After the startup of said cylinder (3), movement of its rod (30) until said wicket gates (2) occupy said closure position and measurement of the corresponding force, called the "measured force";
4/ Comparison of the measured force to the theoretical force calculated in step 1/;
5/ Shutdown of said cylinder (3) if a difference is observed between the two forces upon completion of step 4/;
6/ Modification of the travel of the rod (30) of said cylinder (3) by means of said adjustment device;
7/ After actuation of said wicket gates (2) to make them occupy said opening position, repetition of steps 3/ to 6/ as long as said measured force has not reached the theoretical force.

2. The method according to claim 1 wherein fusible tie rods (5) are used between said wicket gates (2) and said gating ring (4), **characterized by** the fact that these tie rods are also provided with at least one strain gauge (7).

3. The method according to one of the preceding claims, **characterized by** the fact that it includes a final testing step in which steps 3/ to 5/ are repeated while said turbine (1) is in operation.

4. The method according to one of the preceding claims, **characterized by** the fact that at least one shim or at least one screw/nut system is used by way of a device (31) for adjusting the travel of the rod (30) of said cylinder (3).

5. The method according to one of the preceding claims, **characterized by** the fact that it is implemented via a program loaded into a computer.
